(19) Europäisches Patentamt
European Patent Office
Office européen des brevets

(11) **EP 2 698 966 B1**

(12) **EUROPEAN PATENT SPECIFICATION**

(45) Date of publication and mention
of the grant of the patent:
**10.05.2017 Bulletin 2017/19**

(51) Int Cl.:
*H04L 29/08* (2006.01)  *G06F 21/55* (2013.01)
*H04L 29/06* (2006.01)

(21) Application number: **12006166.8**

(22) Date of filing: **30.08.2012**

(54) **Tracking end-users in web databases**

Verfolgung der Benutzer in Web Datenbanken

Suivi des utilisateurs finaux dans des bases de données Web

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2011 IL 21497711**

(43) Date of publication of application:
**19.02.2014 Bulletin 2014/08**

(73) Proprietor: **Deutsche Telekom AG**
**53113 Bonn (DE)**

(72) Inventors:
• **Rozenberg, Boris**
**52515 Ramat Gan (IL)**
• **Gonen, Yaron**
**Rehovot (IL)**
• **Gudes, Ehud**
**Beer Sheva (IL)**
• **Shmueli, Erez**
**Beer Sheva (IL)**
• **Galoz, Nurit**
**Lehavim (IL)**

(74) Representative: **Flaccus, Rolf-Dieter**
**Flaccus · Müller-Wolff**
**Patentanwälte**
**Bussardweg 10**
**50389 Wesseling (DE)**

(56) References cited:
**US-A1- 2007 136 312    US-A1- 2009 328 217**

• **FREDRIK VALEUR ET AL: "A Learning-Based Approach to the Detection of SQL Attacks", 28 May 2005 (2005-05-28), INTRUSION AND MALWARE DETECTION AND VULNERABILITY ASSESSMENT; [LECTURE NOTES IN COMPUTER SCIENCE;;LNCS], SPRINGER-VERLAG, BERLIN/HEIDELBERG, PAGE(S) 123 - 140, XP019011793, ISBN: 978-3-540-26613-6 * Section 4-5 ***

**Description**

**Field of the Invention**

The present invention relates to the field of communication system networks. Specifically this invention relates to tracking of Data Base users in a web environment.

**Background of the Invention**

In computer networks of big organizations, and especially in today's web application world, the HTTP protocol is used to connect users to application servers rather than directly to the database. This has important implications on application security. Unfortunately, HTTP, while useful for its original purpose of static content, is stateless and in many cases is not optimal for many of today's current demands. Stateless means that there is a new connection established for every request. As such, the state of individual and recurring connections can't be supported by the protocol. The stateless aspect of HTTP was solved by the application servers, for the purpose of client to application server communication. The solution utilizes browser cookies and the ability of the application server to create and maintain transparent sessions and state for each client. However, this represents only part of the architecture. The connection from the application server to the database still remains a challenge.

The application server connects to the database on the user's behalf. The way this is done makes a large difference for two critical reasons: security and performance. The ideal solution is to connect the users to the database using a 1:1 mapping model, i.e. every end user has a distinct database account or connection. This is secure because the Data Base Management System (DBMS) knows who is connected and can employ its security mechanisms, specifically access control and auditing.

However, in the web environment the user is almost never directly connected to the database. The user is connected to the application, and the application is connected to the database. Web applications typically support many end users. To connect each user to a private database account or connection could exhaust memory and computing resources on the application server, database or both. The solution is to use a *Connection pool,* a pool of pre-established database connections that links the application to a database schema. The application opens, and keeps open, several physical database connections. When an incoming request is made, the application will grab a connection from the pool, issue a query, and then return the connection back to the pool. For many applications, the criterion of performance is so important that connection pooling is the only viable solution. Additionally, web applications usually connect all end users to the same database account, where this account has the union of all privileges for all users. In this model, the DBMS cannot distinguish between SQL statements of different users. This implies the following security limitations:

1. Auditing: The user's identity is not known and their individual actions are untraceable as well as unregulated.

2. Access Control: The principle of minimal privilege is violated. It is impossible to authorize the web application user with appropriate privileges at the database level since all application users have access to the same data. It means that roles cannot be defined and therefore fine-grained access control to the database cannot be enforced. Ensuring that only the right privileges are available to the user is left only to the application.

3. Intrusion Detection: Not only that the database does not identify the user who accesses it, but it is also impossible to follow SQL statements of the same user. Attackers can exploit this flaw to access sensitive data, or use unauthorized functions. There exist attacks, such as SQL injection, or business logic violations [Roichman, A., Gudes, E., 2007, Fine-grained Access Control to Web Databases, In Proceedings of 12th SACMAT Symposium], which could be seen only at the session level (composed of multiple transactions), and thus could not be detected at the database level.

User-tracking which means associating the user with its corresponding database SQL statement, becomes therefore an essential task for solving the above problems.

Not much academic literature exists on the User-tracking problem. A proposal to solve the problem of users' identification was presented by Roichman, et al. op cit, but the proposed approach that is based on Parameterized views requires changes in both the web application and the database. In terms of commercial products, a few methods for passing users' identity from the web application to the database exist in latest Oracle versions, but again, they require changes in legacy systems. Also, several third party vendors, such as Imperva [http:// www.imperva.com/docs/TB_Universal_User_Tracking.pdf.] suggest a solution to this problem. However, there is no published technical information on how they do it or an evaluation of their performance.

Patent document US2009328217 discloses a system comprising a client, a web server and a database. Network traffic is captured between the client and the web server (HTTP, TCP) and between web server and DB server (SQL). The captured traffic is sent to a secure server which correlates HTTP requests with SQL statements and is thus able to associate SQL statements with user identifiers. The mapping between HTTP requests and SQL statements is inferred during a prior training phase using a frequency table and correlation parameters. Most DBMS authorization mechanisms (usually implemented using Roles, Grant/Revoke operations and Views) rely heavily on the identity of the user accessing the database. When lacking this information, these authorization mechanisms cannot be applied, and intrusions may become easier.

Much effort was invested in developing methods for detecting intrusions to databases. Various Intrusion Detection System (IDS) for databases that also rely on user identity have been proposed in the literature. Intrusion detection methods can be divided into signature-based and anomaly detection techniques. Signature-based techniques typically rely on the prior explicit knowledge of attacks patterns, which in turn is represented by one or more signatures or rules that are stored in a database. The database is frequently updated with new signatures, based on new observations. Anomaly detection systems build models of a normal system behavior during a training phase, and then, using the models the systems attempt to detect deviations from normal behavior during a detection phase. Any deviation from normal behavior is treated as a potential attack.

Intrusions are usually identified within a logical session. A few methods for session boundaries identification that rely on known user identity have been proposed. The session identification task involves identifying session boundaries from the log of database events. The importance of session identification is derived from the following motivations: it enables grouping all user activities within one session and can be useful for performance optimization by utilizing the prediction of future queries; such grouping basically defines a role that can be used to derive the actual access rights of a user; a deviation from such a grouping may indicate an attempt for intrusion, thus it can be used for intrusion detection.

A pre-requisite of identifying logical sessions is identifying users. However, as explained previously, the user identity is unknown at the database level in the web environment. In spite of the importance of this problem, to the best of the knowledge of the inventors, only a small number of published works have tried to address it.

The most relevant work to the present invention, by Roichman and Gudes *op cit,* proposed a parameterized views method that allows transferring the web user identity to the database, thus enabling using the built-in access control mechanisms of the database. The drawback of that approach is that it requires changes in both, the web application and the database, thus making it impractical for legacy systems.

The latest versions of Oracle support several ways to pass the user identity through the web application to the database. For users known to the database, the proxy authentication in Oracle Call Interface (OCI), for example, can be used. OCI enables a web application to set up, within a single database connection, a number of "lightweight" user sessions, each of which uniquely identifies a connected user. The application can switch between these sessions as required to process transactions on behalf of users. But in order to support the fine-grained authorization, Oracle must maintain all the application users. Since these users are created/dropped dynamically by the web application and the number of such users may be tremendous, this solution is not practical for a typical web application. Furthermore, in order to use this method, legacy application should be modified.

Several 3rd party products that refer to the problem of user identification at the database level have been proposed. Imperva *op cit,* for example, has developed multiple methods for identification of end users regardless of how these users access the database. According to vendors, Imperva's SecureSphere product supports architectures that use connection pooling to aggregate multiple user sessions into a single database connection. SecureSphere tracks end users without requiring any changes in existing databases and web applications. However, the algorithms used by SecureSphere were not published and no information is supplied regarding their quality or regarding their efficiency.

Several papers suggested methods to detect attacks on web databases like SQL injection. However, all these papers assume that the problem of user-tracking has been solved which is the major goal of the present invention.

It is therefore a purpose of the present invention to provide a new automatic system and method for improving security in organization computer network by means of identifying a specific user who makes a specific request for information from at least one database in said network

Further purposes and advantages of this invention will appear as the description proceeds.

Summary of the Invention

The above technical problem is solved by the method and system as defined in the claims. The advantage of the present invention over the prior art is that it employs an alternative method for mapping user requests to database queries.

In a first aspect the invention is directed to an automatic system for improving security in an organization's computer network by means of identifying a specific user who makes a specific request for information from at least one database in the network, the system comprises: (a) at least one user application client adapted to submit a user request for data and information; (b) at least one database that contains data related to the request of the user; (c) at least one web application server adapted to receive the user request, and to connect to the at least one database on the user's behalf (d) a users tracking system adapted to execute the process of identifying a specific user who makes a specific request for data and information from the at least one database; the users tracking system receives input from: Network traffic between the web users application client/s and the Web application server/s, or Web application server Logs; and Network traffic between the Web application server/s and the Data Base/s, or Data Base Logs; wherein, the user tracking system provides as an output a mapping of usernames of users to the database SQL statement that correspond to the request they performed; and (e) communication links between the machines that comprise the network.

In a second aspect the invention is directed to an automatic method for improving security in organization computer network by means of identifying a specific user who makes a specific request for information from at least one database in the network, the method comprises:

A) a Network Management phase comprising the steps: (a) handling the acquisition and management of network packets; (b) reconstructing TCP sessions; (c) parsing HTTP and database protocols; and (d) producing an output that comprises: (i) a full session between the Web Server and a user (HTTP requests); and (ii) a full session between the Web Server and the database (SQL statements);

B) a Users Tracking phase comprising the steps: (a) identifying users of Web Application; and (b) mapping of users' actions to SQL statements in the database.

In an embodiment of the method of the invention, the Users Tracking phase comprises the following steps: (a) discovering Web Application actions, wherein an action is defined to be a concatenation of the script name and some relevant parameters of the script; (b) identifying User name, by detecting a user logging in into a Web Application, and what is his/her ID; (c) tracking Web users, by attaching the user ID to all the actions the user has performed with the Web application; (d) identifying SQL statements, by finding and fingerprinting the set of SQL statements which are possible in a specific Web application, given a log of SQL statements for some time period; (e) Mapping from web action to SQL queries, which attaches the username to each SQL query performed by the Web application on the database; and (f) tracking Database users, which produces a tagged sequence of SQL queries.

In an embodiment of the invention, the method comprises: (a) a learning mode, wherein the system automatically learns the login request/response of the protected Web Application, the Web Application functionality, possible SQL statements, and the mapping function of user's requests to the actual SQL statements in the database; and (b) a real time mode, wherein the system creates a log of SQL statements with an actual user name attached to each statement.

All the above and other characteristics and advantages of the invention will be further understood through the following illustrative and non-limitative description of embodiments thereof, with reference to the appended drawings. In the drawings the same numerals are sometimes used to indicate the same elements in different drawings.

## Brief Description of the Drawings

- Fig. 1 schematically shows a conceptual view of the Users Tracking (UT) system of the invention;

- Fig. 2 is a flow chart schematically shows the architecture of the UT system;

- Fig. 3 schematically shows the main stages of the UT system; and

- Fig. 4 schematically shows an example of select statement fingerprint.

## Detailed Description of Embodiments of the Invention

The present invention is a method and system that provides user tracking functionality for web databases. The system enables tracking of all activities from the end user through the Web application to the database, without requiring any changes in existing databases, and web applications. Furthermore, this new user-tracking ability provides a basis for fine grained access control. Moreover, such user-tracking ability is required for the identification of logical sessions, which are crucial to intrusion detection techniques. Finally, the users tracking ability can be used to monitor the actual access privileges of users and can be used for role mining and role engineering. The latter application is extremely important for legacy applications.

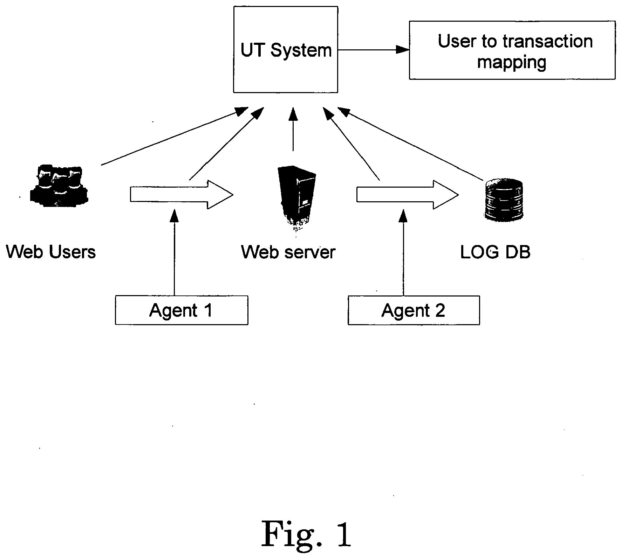

The system of the present invention provides the ability to monitor and track queries from the end user through the Web application to the database. The general conceptual view is schematically depicted in Fig. 1.

As can be seen in Fig. 1, the UT (Users Tracking) system receives input from users to WebServer and from WebServer to database (DB) network traffic or from the WebServer and DB log files (if available). Fig. 1 also shows two software agents deployed on the network (on the routers for example or on the monitoring devices that are widely used by IDS/IPS. Each of the agents monitors the relevant traffic. The first one, i.e. Agent 1 one, monitors traffic between the user and WebServer and the second one, i.e. Agent 2, monitors traffic between the WebServer and the database. Both agents send acquired packets to the UT system - the software, deployed on any participated server (WebServer/DBServer/Any other server)). The output of the UT system is a mapping of users to the database SQL statements that correspond to the request they performed

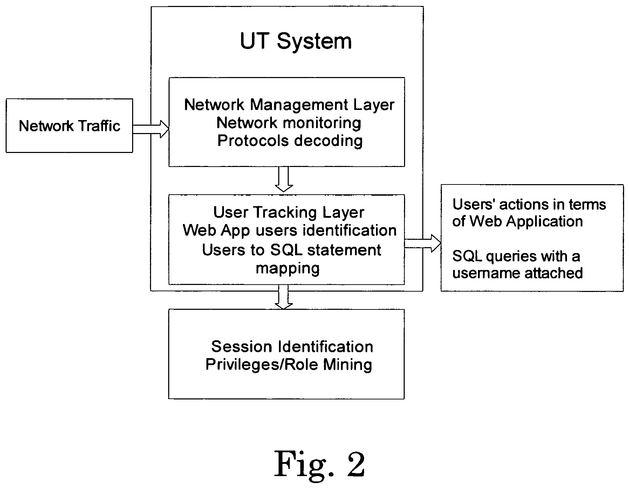

Fig. 2 provides a detailed view of the UT system. The UT system contains two layers, namely the Network Management layer and the Users Tracking layer. The following is a brief description of each layer:

The Network Management layer includes modules which handle the acquisition and management of network packets. It handles the reconstruction of TCP sessions and the parsing of HTTP and DB protocols. The output of this layer is (i) a full session between the Web Server and a user (HTTP requests) and (ii) a full session between the Web Server and the database (SQL statements). If both sessions (i and ii) are logged into the Web Server and DB server respectively and available for the system of the present invention, these LOGs could be an input for the UT system, thus replacing the Network Management phase. The implementation of this layer is a technical issue and is not going to be further disclosed herein.

The Users Tracking layer includes modules which handle the Web Application users' identification and mapping of users' actions to SQL statements in the database. This layer is responsible for discovering the actions available in the Web Application, discovering SQL statements possible in the system, and matching between the discovered actions and SQL statements. This layer can be operated in two modes: Learning mode and Real-Time mode. In the Learning mode the output of this layer is a set of actions existing in a certain Web Application, a set of possible SQL statements usable in the database, and, for each action, the mapping to the set of the actual SQL statements in the database. In the Real-Time mode, the output of this layer is two log files. The first one contains a log of users' actions in terms of Web Application actions. The second one contains a log of SQL statements with a username attached.

As mentioned above, the system can be operated in one of two modes: Learning and Real-Time. In the Learning mode the system will automatically learn the login request/response of the protected Web Application, the Web Application functionality and the mapping function of user's requests to the actual transactions/SQL statements in the database. In the Real-Time mode the system will create the log of transactions with the actual user name attached to each transaction.

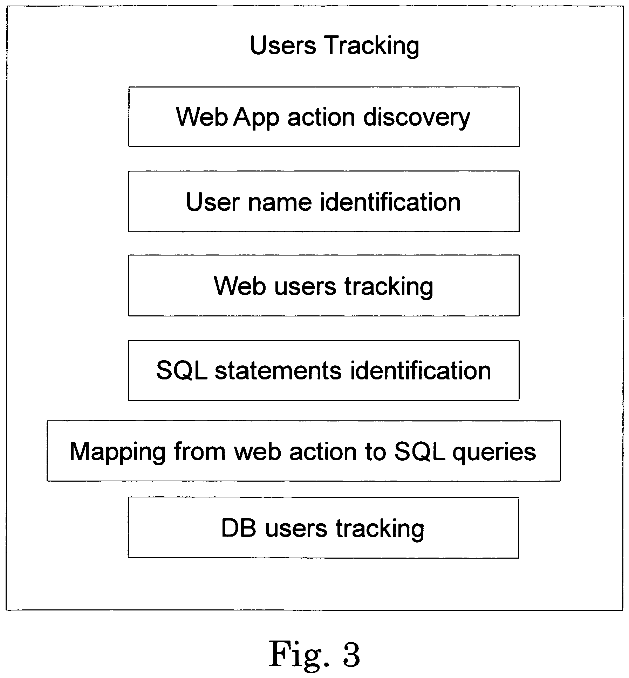

Fig. 3 describes the main steps of the Users Tracking task. A detailed description of the algorithms developed for each step will now be presented. For the description below it is assumed that the Network Management layer has performed its task and logged reconstructed sessions as described above to the log files.

1. Web application action discovery

The first step is Web application action discovery. Each Web application has a way of working to accomplish its functionality, which is represented by an ordered sequence of actions that users can perform. For example, in a banking Web Application, in order to transfer money to another account, the user should request a transfer form (the first action) fill in the form (the second action) and submit the form (the third action). Since users can only perform the operations available at the application interface and no other operation is available for the end-users, the main question that is addressed at this stage is which actions are supported by an arbitrary Web Application. Typically, these actions are applied by HTTP GET or POST requests from the user's browser. Consider the following HTTP request:

```
GET http://my.dns/act.php?lname= Smit&fname=Jon
```

It contains the PHP script name (other script-engines such as ASP may be considered) followed by the list of parameters for the script. So, if it is assumed that there is a different script to each of the actions in the Web application, all the scripts can be harvested, and a list of all the actions can be compiled. However, consider the following example:

```
GET http://my.dns/act.php?lname= Smit&fname=Jon&op=add
GET http://my.dns/act.php?lname= Smit&fname=Jon&op=remove
```

In the example above there is a problem: the script name is the same for both requests, but the action itself resides in a parameter, whose name is of course arbitrary. As can be guessed, the script act.php adds the input name to a list if the parameter op equal to "add", and removes the input name from the list if the parameter op equal to "remove".

The approach of the present invention for the first step is to define an action to be a concatenation of the script name and some relevant parameters of the script. The key question is how to identify the relevant parameters?

The first step of the method of the present invention comprises two phases: the training phase and the pruning phase. The assumption is that there is a Web Server log file with all HTTP requests submitted by users to a certain Web Application during a specified period of time (it is the task of the Network Monitoring layer of the UT system of the invention to create such a log file). First this log is split into two parts - one for the training and one for the pruning. Next the following algorithm called herein Algorithm 1 is run:

**Algorithm 1 - Web application actions discovery:**

```
1. For each PHP script rk in the Training
   Data(1≤k≤NumOfPHPScripts)
2. Let Srk = {p1, p2, ...pn} be a set
        of candidates to comprise the
        action for request rk
3. For each parameter pi in Srk
        (1≤i≤n)
4. Obtain the set Spi of
            different values of pi
5. For each PHP script rk in the Pruning Data
6. For each parameter pi in rk
7. if pi.value ∉Spi
8. Srk = Srk-{pi}
```

In line two of Algorithm 1, for each PHP script in the log file, the set Srk of parameters of the script is generated. Initially each parameter in Srk is a candidate to comprise the action for this script (together with a script name and other parameters). In lines 3-4 of the algorithm, for each parameter in the set Srk, a set of different values that this parameter receives over the training part of the log file is created. Next in lines 5-7 of the algorithm there is a test on the pruning part of the log, whether some parameter receives a value unseen previously. If indeed some parameter receives a value unseen previously, this parameter cannot be considered as a candidate to comprise the action and it is removed from the set of candidates in line eight of the algorithm. The assumption behind this approach is that in typical Web application, all the actions should appear during certain time interval (domain dependent parameter). For example, if there is a bank Web application log for a one month period, it is reasonable to assume that all possible actions will appear during the first week of the log. Thus, in the present invention the one month log could be split into two parts: one week for training and three weeks for pruning. In the training phase all different values of each parameter of each script are considered to be a candidate to comprise the action. If this is true and the parameter comprises the action, it should not receive unseen values in the rest of the log, and if it does, it is removed from the list of candidates. Finally, for each PHP script all remaining parameters (in the set Srk) together with a script name comprise the action. Following is an example of the operation of algorithm 1.

Assume the following log file (only one script Trade.php is considered):

```
1. GET http://my.dns/Trade.php?
   act=request&type=buy&tradeId=21&cnt=10
2. GET http:// my.dns
   /Trade.php?tradeId=22&type=buy&act=request&cnt=5
3. GET http:// my.dns /Trade.php?act=request&tradeId=23
   &cnt=7&type=buy
4. GET http:// my.dns /Trade.php? cnt=8
   &act=request&type=sell&tradeId=24
5. GET http://my.dns/Trade.php?act=
   request&type=buy&tradeId=28&cnt=1
6. GET http://my.dns/Trade.php?
   tadeId=29&type=buy&act=request&cnt=2
```

The first four lines are used for the training and the last two lines for the pruning (for the purpose of the example only). In general the percent of data used for training is application dependent and should be provided by the system administrator.

In line two of the algorithm a set STrade.php of all the parameters of the script is created:

```
STrade.php={act,type,tradeId,cnt}
```

In the lines 3-4 the set of different values for each parameter in the set STrade.php is created as following:

```
Sact = {request}
Stype = {buy,sell}
StradeID = {21,22,23,24}
Scnt = {10,5,7,8}
```

Next, in the lines 6-8, for each parameter there is a test, whether the parameter receives new values over the pruning part of the log, by comparing the actual values with a set of previously obtained values. The results show that 28 is not in the StradeID set and 1 is not in the Scnt set. At this point the set STrade.php is reduced to be {act, type}. It means that the action is defined as concatenation of "STrade.php", the value of parameter act and the values of parameter type. Thus there are two actions in this example:

```
1. STrade.php+Sact=request+Stype=buy
2. STrade.php+Sact=request+Stype=sell
```

2. User Name Identification

The second step is user name identification. The goal of this step is to detect when a user is logging in into a Web Application and what is his/her ID (username). Since the parameter's name (login) varies and it is application-dependent, one of the following methods to identify the username can be chosen:

- Keywords - to maintain a list of words that might indicate a user logging in.
- Manual - every Web application that wishes to take advantage of the invention has to provide a description of its login process, so the system will be able to identify the username field in HTTP requests.

3. Web Users Tracking

The third step is Web users tracking. After a user login event has been detected, the goal of Users tracking task is to attach the user ID to all the actions the user has performed with the Web application. This can be achieved by associating the user ID with HTTP session ID, which is typically generated and sent from a web server to a client to identify the current interaction session. The client usually stores and sends the session ID as an HTTP cookie and/or sends it as a parameter in GET or POST queries. This approach allows the UT layer of the User-Tracking system to track all user activity in terms of Web application actions. Note that after this stage there is a log of web actions with each action associated with the user-id that performed it.

**4. SQL Statement Identification**

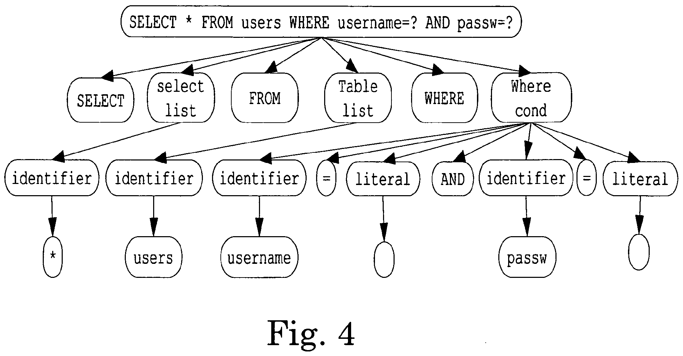

The fourth step is SQL statement identification. The goal in this step is to find (and fingerprint) the set of SQL statements that are possible in the specific Web application, given a log of SQL statements for some time period. We do it by learning the structure of each SQL statement possible in the system and fingerprinting that structure. There are a large number of such possible statements, but they usually differ only in parameters values. If the parameters are replaced in each statement with variables, some high level representation of the SQL statement are obtained, called the fingerprint. Fig. 4 gives an example of an SQL statement and its corresponding fingerprint.

In order to identify the SQL statements, an SQL lexical analyzer is used to create the parse-tree. Since the SQL statements in the real database log do not contain "?" as parameters, but the values themselves, a schema-description is needed in order to differentiate schema objects from parameters. Using such schema-description given by the user or extracted from the database, the parameters are automatically extracted from the statement and a fingerprint is created.

**5. Mapping from Web actions to SQL Statements**

The fifth step is mapping from Web actions to SQL statements. This is a major step in the methodology. The main goal is to attach the username to each SQL query performed by the Web application on the database. So far after the four steps, the web server is able to attach the username to each action in terms of the Web application. In order to complete the task it is necessary to know the mapping function from the Web application action to the actual SQL statements for each action existing in the Web application.

First the problem is defined formally:

Given a set of actions, supported by the Web application $A=\{a_1,a_2,...,a_k\}$, a set of SQL statements supported by the database $Q=\{q_1,,q_2,...,q_l\}$, a sequence of actions performed by the Web application during some specified period of time $SA=\langle a_1',a_2',...a_n' \rangle, a_i' \in A$, and a sequence of corresponding SQL statements $Sq=<q_1,q_2,...,q_m>,q_i \in Q$, then a subjective function $f:A \to Q$ that maps every action to a sequence of SQL statements should be produced. For example: $f(a_5)=<q_1,q_{10},q_2>$, meaning that the action $a_5$ is mapped to the sequence $<q_1,q_{10},q_2>$.

The main technique that is used is based on frequent sequence mining. First, by using Timestamps which are present in the logs, the SQL statements which can be mapped to the action are identified. Note that, this set is not unique since several actions may be performed concurrently by the Web application. Then the subset of mapped SQL statements is found by using the frequent sequence mining technique. The intuition is that a frequent sequence corresponds to the actual set of mapped statements. Algorithm 2 is used to construct this mapping:

## Algorithm 2 - Map Function Creation

1. For each ai $\in$ A

2. $DS_{Q_{a_i}} = \phi$

3. For each action $a_i' \in S_A$

4. Tstart=Start time of $a_i'$ Tstop=Stop time of $a_i'$

5. Let's $S_{Q_{a_i}},$ be a sequence of all the queries from Db log with the TStart$\leq$QtimeStamp$\leq$TStop

6. Add $S_{Q_{a_i}}$ to $DS_{Q_{a_i}}$

7. For each $DS_{Q_{a_i}}$

8. $f(a_i') = \max Seq[CAMLS(DS_{Q_{a_i}})]$

In algorithm 2, for each action $a_i' \in S_A$ the start and stop time are known (from the first step). It is to be noted that $a_i'$ can be executed in parallel with other actions. All the queries executed during this period of time on the database can be separated. This sequence of queries is denoted as $S_{Q_{a_i}}$ (line five of algorithm 2). The sequence $S_{Q_{a_i}}$ contains queries executed by $a_i'$ (and maybe some other queries). In line six of the algorithm, for each action $a_i'$ a dataset $DS_{Q_{a_i}}$ of all $S_{Q_{a_i}}$ (one sequence for each instance of the action $a_i'$ in the $S_A$) is created and for each such dataset the longest frequent sequence (not necessarily successive) can be found, by using the CAMLS algorithm [Gonen, Y., Gal-Oz, N., Yahalom, R., Gudes, E., 2010. CAMLS: A Constraint-based Apriori Algorithm for Mining Long Sequences. DASFAA 2010: 63-77] (line eight of algorithm 2). Each such sequence represents a set of SQL queries to which the corresponding action $a_i'$ is mapped.

The algorithm CAMLS is chosen from among other existing algorithms for frequent sequences mining because, given a database and a minimal support value, CAMLS efficiently generates all sequences that repeat (i.e., frequent) in the database with a support equal to or greater than a minimal support value. In the implementation of the present invention the frequent sequences were enumerated (with very high values of support like 100%) for each $DS_{Q_{a_i}}$ separately and the longest sequence was taken as the output.

This approach works well for the case when each web action has exactly one mapping to the sequence of transactions. But some web actions have more than one mapping. For example, in the domain of the simulation described herein below, if some user buys his/her first security, the system performs insert (tID = 14) into Holdings Table. In the case that the user already has securities, the system performs update (tID = 13) on the Holdings Table. In both cases the user performs the same action (aID = 6) on the Web application with the same parameters. This is depicted by the Log shown in Example 1.

**Example 1**: **Multiple Mapping**

```
1104735606282,1104735606282,6,,sid,92,tradeId,200000000000002,
1104735606284,1104735606284,6,,sid,92,tradeId,200000000000006,

    1104735606282,12,Select,1,*,1,holdings,0,4300000571,92,80,0
    1104735606282,13,Update,holdings,1,h_qty,1,t_id,4300000571,9
    1104735606284,12,Select,1,*,1,holdings,0,4300000571,92,80,0
    1104735606284,14,Insert,holdings,2,t_id,ca_id,4300000571,92,
```

The mapping problem in this case is much more complex. High values of support can not be used anymore. An attempt was made to use a bi-partite graph matching algorithm, but the results were disappointing. Therefore, Algorithm 3 has been developed for solving the mapping problem in the case of actions that have more than one mapping.

**Algorithm 3 Map Function Creation**

```
1. Set minSupport to 100%
2. Run algorithm 2 with current
        minSupport value
3. Tag (still not tagged) queries
        in the DBLog with the action ID
        using the map function created
        by algorithm 2 /*if there are
        multiple choices - compare the
        parameters of the action with
        the parameters of the SQL
        queries. If the parameters are
        same, or there are no parameters
        - don't tag */
4. Select all not tagged queries in the
    DBLog and create set Ps of all
    possible web actions that not
    tagged queries can belong to
     (using the time stamps)
5. minSupport = minSupport - delta
6. while (Ps≠φ && minSupport≥minSupportThreshold)
7. execute steps 1-5 for new
        minSupport value and actions
        set A = Ps (only problematic
        actions)
8. for each action a in the WebLog
9. select Start and Stop Time
10. if there is no other action a in
        the interval between TStart and
        TStop
11. add all transactions tagged
            as belonging to a to f(a)
```

In algorithm 3, algorithm 2 is applied iteratively, each time reducing the minSupport value (starting from 100%) by a predefined small fraction (delta) and an attempt is made to tag the DBlog with the action ID using the map function obtained so far (line 3). If all the transactions have been tagged or minSupportThreshold has been reached, the loop is stopped, and the final map function is created from the tagged DBLog in the lines 8-10 of the algorithm.

## 6. DB Users Tracking

The sixth step is DB tracking. It is the last step of the algorithm, which is mainly needed in the Run-time phase. Given a mapping function $f : A \rightarrow Q$ from the previous section, a tagged sequence of actions $S'_A = \langle a_1^{u_1}, a_2^{u_2}, ... a_n^{u_o} \rangle, a_i^{u_j} \in A$ (every action is tagged with a user ID), and a sequence of SQL queries $S_q = \langle q_1, q_2, ..., q_m \rangle, q_i \in Q$, a tagged sequence of SQL queries $S'_q = \langle q_1^{u_1}, q_2^{u_2}, ... q_n^{u_o} \rangle, q_i^{u_j} \in Q$ is produced.

Note that, the first query in the sequence $S_q$ belongs to the first action in the sequence $S'_A$. All the queries in the sequence $S_q$ that belong to the first action in the sequence $S'_A$ (using f) can be eliminated (or marked). What is left is $S'_A$ minus the first action and $S_q$ minus all the queries belonging to the first action. Now it is possible to continue doing the last step for each query in the sequence $S_q$ and for each action in the sequence $S'_A$, recursively. The marking of all the queries might be tricky: for example, what happens when two or more actions contain the same queries on the database? In this case, in order to know which query to eliminate, it will be necessary to examine the parameters of the query and compare them to the action parameters in the Web application (see Example 1).

### Example 2: DB Users Tracking

In Example 2 two examples of DB users tracking are shown. In example (a) a single user (u1) executes the action (a1), f(a1)=<t1,t10,t2>; in the example (b), two users (u1, u2) execute the same action (a1) in parallel, f(a1)=<t1,t10,t2>. The two actions a1 can match the two transactions t1 in two different ways. The exact match is determined by checking the equality of action parameters and SQL statement parameters.

Note that, the method above can be applied also in real time ( $S'_A$ and $S_Q$ are arbitrary sequences and therefore SQL queries can be marked on the fly using the same method).

In order to evaluate system of the present invention, a comprehensive environment was needed with thousands of users working in it. Since such an environment was not available to the inventors, it was decided to simulate an environment on a real-life scenario based on a benchmark which is commonly used to evaluate DBMS performance. The simulation was divided into two phases. During the first phase, the Network Management layer only was evaluated and during the second step the Users Tracking Layer (see Fig. 3) was evaluated separately on a simulated input.

Recall that the goal of the Network Management Layer is to reconstruct a full session between the Web Server and a user (HTTP requests) and a full session between the Web Server and the database (SQL statements) from the network traffic. This module was run on several Web applications and its output recorded to the log files. These logs were tested manually for correctness. From this point it was assumed that this layer was working correctly and the second phase could now be evaluated. The second phase simulates a comprehensive environment with thousands of users, and logs out both the web server log and the database log.

The log generator simulates the operation of a web application and of a database server, and therefore outputs two logs accordingly. The log generator is build of two parts - the standard TPC-E emulator, and a Java emulator, developed by the inventors of the present invention. TPC Benchmark™ E (TPC-E) is an On-Line Transaction Processing (OLTP) workload which is commonly used to evaluate the performance of various database systems. It is a mixture of intensive transactions that simulate the activities found in complex OLTP application environments. The database schema, data population, transactions, and implementation rules have been designed to be broadly representative of modern OLTP systems. The TPC-E emulator, which the log generator is based upon, models the activity of a brokerage firm that manages customer accounts, executes customer trade orders, and is responsible for the interactions of customers with financial markets. It is composed of four different roles: customers, brokers, newsmen and market. The database design and the transaction flow of the business model are omitted herein. TPC-E generates all the events in the system and passes them to the emulator of the invention, which creates a web log record and a series of SQL statements associated with each web-action according to Table 1. These statements are logged in DB log records.

**Table 1: Mapping from Web actions to SQL queries.**

| Role | Web action | SQL queries |
|---|---|---|
| customer | trade request | select on security table (also join with code tables) insert to trade table with status 'request' |
| broker | submit trade | update trade status to 'submitted' |
| broker | show trade requests | select on accounts only this broker handles select on trade table for requests (also join with code tables) |
| market | show submitted requests | select for submitted or pending trans' |
| market | handle trade | select if holding exists insert/update/delete holdings check for pending condition (select on security table) insert/update/delete holdings or nothing |
| newsman | insert news | select on company table insert to news_items table |
| all | read news | select on new_items for titles. select on news_items and company tables |
| all | read single news item | select on new_items for title and item body select on news_items and company tables |
| all | Query security details | select on security table |

10 triples of logs were generated: <Web application log, DB log, tagged DB log> (tagged DB Log is identical to DB log, but also contains the username attached to each query) with the following parameters:

- MaxNumOfUsers: 500-1000 (from the set of four roles)
- MaxNumOfWebActions 16500 - 17500 (from the set of 16 different actions)
- MaxNumberOfSQLQueries 19000 - 21600 (from the set of 14 different transactions)
- MaxNumOfPhysicalSessions: 2000-2500
- MaxNumOfConcurentUsers: 1-10

Note that, in this evaluation, web actions and map functions are known in advance. So in order to evaluate the web action identification and map function creation algorithms, the corresponding modules of the system were run and the results were compared with the expected results. In order to evaluate the Users tracking algorithm, the User Tracking module of the present invention was run on the pairs <Web application log, DB log> and its output was compared with the tagged DB log.

In all the runs where each web action appears at least twice in the training set, the output was identical to the expected one. In the cases when some web action appears only one time or does not appear at all in the training, the corresponding SQL statements were not tagged with a user name (because a map function for these actions was not learned).

Although embodiments of the invention have been described by way of illustration, it will be understood that the invention may be carried out with many variations, modifications, and adaptations, without exceeding the scope of the claims.

**Claims**

1. An automatic method for improving security in an organization's computer network by means of identifying a specific user who makes a specific request for information from at least one database in said network by monitoring and tracking queries from the user through a Web application to the database, the method comprising:

   A. a Network Management phase comprising the steps:

   a) handling the acquisition and management of network packets;
   b) reconstructing TCP sessions;
   c) parsing HTTP and database protocols; and
   d) producing an output that comprises:

   i) a full session between a Web Server and a user (HTTP requests), which is logged into the Web server; and
   ii) a full session between the Web Server and a database (SQL statements), which is logged into a database server; and

   B. a Users Tracking phase comprising two modes:

   i) a learning mode comprising the steps:

   a) discovering an ordered sequence of actions that users can perform to accomplish the functionality of a Web Application, wherein an action is defined to be a concatenation of the script name and some relevant parameters of the script;
   b) identifying User name, by detecting a user logging in into a Web Application, and what is his/her ID;
   c) tracking Web users, by attaching the user ID to all the actions the user has performed with the Web application;
   d) identifying SQL statements, by finding and fingerprinting the set of SQL statements which are possible in a specific Web application, given a log of SQL statements for some time period;
   e) Mapping from web action to SQL queries, which attaches the username to each SQL query performed by the Web application on the database; and

   ii) a Real Time mode comprising tracking Database users, which produces a tagged sequence of SQL queries;

   **characterized in that**:

   - the relevant parameters of the script in step B(i)(a) are determined by splitting a Web Server log file created in the Network Management Phase of the method with all HTTP requests submitted by users to a certain Web Application during a specified period of time into two parts - one part for a training phase and one part for a pruning phase and then running a Web applications actions discovery algorithm to execute both phases; and
   - the mapping in step B(i)(e) is carried by executing a Map Function Creation algorithm that identifies the SQL statements which can be mapped to the action using Timestamps which are present in the logs created in step A.d. and then finds the subset of mapped SQL statements by using a frequent sequence mining technique; and
   - step B(ii) is carried out by an algorithm that uses the information obtained in steps B(i)(a) to B(i)(e) to assign the real user names to the observed SQL queries.

2. A method according to claim 1, wherein, if the web action has more than one mapping, then the Map Function Creation algorithm of claim 1 is applied iteratively.

3. An automatic system for improving security in an organization's computer network by means of identifying a specific user who makes a specific request for information from at least one database in said network, said system comprising:

   a) at least one user application client adapted to submit a user request for data and information;
   b) at least one database that contains data related to said request of said user;

c) at least one web application server adapted to receive said user request, and to connect to said at least one database on said user's behalf;

d) a user tracking system configured to execute the method of claim 1 for identifying a specific user who makes a specific request for data and information from said at least one database by monitoring and tracking queries from the user through a Web application to the database;

said users tracking system receives input from:

- Network traffic between the web users application client/s and the Web application server/s, or Web application server Logs; and
- Network traffic between the Web application server/s and the Data Base/s, or Data Base Logs;

wherein, said user tracking system provides as an output a mapping of usernames of users to the database SQL statement that correspond to the request they performed; and

e) communication links between the machines that comprise said network.

4. A system according to claim 3, configured to execute:

a) a learning mode, wherein the system automatically learns the login request/response of the protected Web Application, the Web Application functionality, possible SQL statements, and the mapping function of user's requests to the actual SQL statements in the database; and

b) a real time mode, wherein the system creates a log of SQL statements with an actual user name attached to each statement.

**Patentansprüche**

1. Automatisches Verfahren zur Verbesserung der Sicherheit in einem Computernetzwerk einer Organisation mittels Identifizierung eines spezifischen Benutzers, der eine spezifische Anfrage nach Informationen aus mindestens einer Datenbank in diesem Netzwerk stellt, durch Monitoring und Tracking von Ab-fragen, die von dem Benutzer durch eine Webanwendung an die Datenbank gestellt werden, wobei das Verfahren umfasst:

A. eine Netzwerkmanagement-Phase, umfassend die Schritte:

a) Handhaben der Erfassung und des Managements von Netzwerkpaketen,
b) Rekonstruieren von TCP-Sitzungen,
c) Parsing von HTTP- und Datenbankprotokollen, und
d) Erzeugen einer Ausgabe, welche umfasst:

i) eine vollständige Sitzung zwischen einem Webserver und einem Benutzer (HTTP-Anfragen), welche in dem Datenbank-Server protokolliert ist, und
ii) eine vollständige Sitzung zwischen dem Webserver und einer Datenbank (SQL-Anweisungen), die in einem Datenbank-Server protokolliert ist, und

B. eine Benutzertracking-Phase, umfassend die zwei Modi:

i) einen Lernmodus, umfassend die Schritte:

a) Entdecken einer geordneten Sequenz von Aktionen, welche der Benutzer ausführen kann, um die Funktionalität einer Webanwendung auszuführen, wobei eine Aktion als Konkatenation des Skriptnamens und relevanter Parameter des Scripts definiert ist,
b) Identifizieren des Benutzernamens durch Detektion eines Benutzers, der sich in eine Web-Anwendung einloggt, und seiner/ihrer ID,
c) Tracking von Web-Benutzern durch Anheften der Benutzer-ID an alle Aktionen, die der Benutzer mit der Webanwendung durchgeführt hat,
d) Identifizieren von SQL-Anweisungen durch Finden und Fingerprinting der Menge von SQL-Anweisungen, die in einer spezifischen Webanwendung möglich sind, bei einem gegebenen Protokoll von SQL-Anweisungen für einen Zeitraum,
e) Mapping von Web-Aktion auf SQL-Abfragen, wodurch jeder SQL-Abfrage, die von der Webanwendung auf der Datenbank durchgeführt wurde, der Benutzername hinzugefügt wird,

und

ii) einen Echtzeitmodus, umfassend das Tracking von Datenbankbenutzern, wodurch eine getaggte Sequenz von SQL-Abfragen erzeugt wird,
**dadurch gekennzeichnet, dass**:

- die relevanten Parameter des Scripts in Schritt B(i)(a) bestimmt werden durch Splitten einer in der Netzwerkmanagement-Phase des Verfahrens erzeugten Webserver-Logdatei mit allen HTTP-Anfragen, die von Benutzern während eines bestimmten Zeitraums an eine bestimmte Webanwendung gestellt wurden, in zwei Teile - einen Teil für eine Training-Phase und einen Teil für eine Pruning-Phase - und danach Ausführen eines Algorithmus zum Entdecken von Aktionen von Webanwendungen, um beide Phasen auszuführen, und

- das Mapping in Schritt B(i)(e) durch Ausführen eines Algorithmus zum Erstellen einer Map-Funktion erfolgt, welcher die SQL-Anweisungen, die auf die Aktion gemappt werden können, identifiziert, und zwar unter Verwendung von Zeitstempeln, die in den Protokollen, welche in Schritt A.d. erstellt wurden, vorliegen, und anschließend die Teilmenge der gemappten SQL-Anweisungen durch Anwendung einer Mining-Methode für das Mining häufiger Sequenzen findet, und

- Schritt B(ii) durch einen Algorithmus ausgeführt wird, der die in den Schritten B(i)(a) bis B(i)(e) erhaltenen Informationen verwendet, um den beobachteten SQL-Anweisungen die realen Benutzernamen zuzuordnen.

2. Verfahren nach Anspruch 1, wobei, wenn die Web-Aktion mehr als ein Mapping aufweist, der Algorithmus für die Erzeugung einer Map-Funktion nach Anspruch 1 iterativ angewendet wird.

3. Automatisches System zur Verbesserung der Sicherheit in einem Computernetzwerk einer Organisation mittels Identifizierung eines spezifischen Benutzers, der eine spezifische Anfrage nach Informationen aus mindestens einer Datenbank in dem Netzwerk stellt, wobei das System umfasst:

a) mindestens ein Benutzeranwendungsclient, der dazu geeignet ist, eine Benutzeranfrage nach Daten und Informationen zu stellen,
b) mindestens eine Datenbank, welche Daten enthält, die die Anfrage des Benutzers betreffen,
c) wenigstens ein Webanwendungsserver, der dazu geeignet ist, die Benutzeranfrage zu empfangen und sich mit der wenigstens einen Datenbank im Namen des Benutzers zu verbinden,
d) ein Benutzertracking-System, das dafür ausgelegt ist, das Verfahren nach Anspruch 1 zur Identifizierung eines spezifischen Benutzers durchzuführen, der eine spezifische Anfrage nach Daten und Informationen aus der mindestens einen Datenbank stellt, durch Monitoring und Tracking von Abfragen, die von dem Benutzer durch eine Webanwendung an die Datenbank gestellt werden, wobei
das Benutzertracking-System Eingaben erhält von:

- dem Netzwerkverkehr zwischen dem/den Webbenutzeranwendungsclienten und dem/den Webanwendungsserver(n), oder Webanwendungsserver-Protokollen, und
- dem Netzwerkverkehr zwischen dem/den Webanwendungsserver(n) und der/den Datenbank(en), oder Datenbank-Protokollen,

wobei das Benutzertracking-System als Ausgabe ein Mapping von Benutzernamen von Benutzern auf die Datenbank-SQL-Anweisung ausgibt, die der von ihnen ausgeführten Anfrage entsprechen, und
e) Nachrichtenverbindungen zwischen den Maschinen, welche das Netzwerk umfassen.

4. System nach Anspruch 3, welches dazu ausgelegt ist,

a) einen Lernmodus, in welchem das System automatisch die Login-Anfrage/-Antwort der geschützten Webanwendung, die Funktionalität der Webanwendung, mögliche SQL-Anweisungen und die Mapping-Funktion von Anfragen des Benutzers auf die tatsächlichen SQL-Anweisungen in der Datenbank lernt, und
b) einen Echtzeitmodus, in dem das System ein Protokoll von SQL-Anweisungen erzeugt, in welchem mit jeder Anweisung ein tatsächlicher Benutzername verbunden ist, auszuführen.

**Revendications**

1. Procédé automatique pour améliorer la sécurité dans un réseau d'ordinateurs d'une organisation au moyen de l'identification d'un utilisateur spécifique qui introduit une demande spécifique d'informations à partir d'au moins une base de données dans ledit réseau en surveillant et en suivant des demandes de l'utilisateur à travers une application Web jusqu'à la base de données, le procédé comprenant:

A. une phase de gestion de réseau, comprenant les étapes suivantes:

   a) réaliser l'acquisition et la gestion de paquets de réseau;
   b) reconstruire des sessions TCP;
   c) analyser des protocoles HTTP et de base de données; et
   d) produire une sortie comprenant:

   i) une session complète entre un serveur Web et un utilisateur (requêtes HTTP), qui est consignée dans le serveur Web; et
   ii) une session complète entre le serveur Web et une base de données (instructions SQL), qui est consignée dans un serveur de base de données,

et

B. une phase de suivi des utilisateurs, comprenant deux modes:

   i) un mode d'apprentissage, comprenant les étapes suivantes:

   a) découvrir une séquence ordonnée d'actions que des utilisateurs peuvent exécuter pour accomplir la fonctionnalité d'une application Web, dans lequel une action est définie pour être une concaténation du nom de script et de plusieurs paramètres pertinents du script;
   b) identifier un nom d'utilisateur, en détectant un enregistrement d'utilisateur dans une application Web, et quel est son ID;
   c) suivre les utilisateurs Web, en attachant l'ID d'utilisateur à toutes les actions que l'utilisateur a exécutées avec l'application Web;
   d) identifier les instructions SQL, en trouvant et en pistant par empreinte numérique l'ensemble d'instructions SQL qui sont possibles dans une application Web spécifique, selon un journal d'instructions SQL pendant une certaine période de temps;
   e) réaliser un mappage depuis une action Web sur des requêtes SQL, qui attache le nom d'utilisateur à chaque requête SQL exécutée par l'application Web sur la base de données,

   et

   ii) un mode en temps réel comprenant le suivi des utilisateurs de la base de données, qui produit une séquence étiquetée de requêtes SQL,
   **caractérisé en ce que**:

   - les paramètres pertinents du script à l'étape B(i)(a) sont déterminés en fractionnant un fichier journal de serveur de Web créé lors de la phase de gestion de réseau du procédé avec toutes les requêtes HTTP soumises par des utilisateurs à une certaine application Web pendant une période de temps spécifiée en deux parties, une partie pour une phase de formation et une partie pour une phase d'élagage, et en exécutant ensuite un algorithme de découverte des actions des applications Web afin d'exécuter les deux phases; et
   - le mappage à l'étape B(i)(e) est réalisé en exécutant un algorithme de création de fonction de mappage qui identifie les instructions SQL qui peuvent être mappées sur les actions en utilisant des estampilles temporelles qui sont présentes dans les journaux créés à l'étape A.d., et qui trouve ensuite le sous-ensemble d'instructions SQL mappées en utilisant une technique d'exploration des séquences fréquentes; et
   - l'étape B(ii) est exécutée par un algorithme qui utilise les informations obtenues aux étapes B(i)(a) à B(i)(e) pour assigner des noms réels d'utilisateur aux requêtes SQL observées.

2. Procédé selon la revendication 1, dans lequel, si l'action Web comprend plus d'un seul mappage, alors l'algorithme de création de fonction de mappage de la revendication 1 est appliqué de façon itérative.

3. Système automatique pour améliorer la sécurité dans un réseau d'ordinateurs d'une organisation au moyen de l'identification d'un utilisateur spécifique qui introduit une demande spécifique d'informations à partir d'au moins une base de données dans ledit réseau, ledit système comprenant:

a) au moins une application client d'utilisateur apte à soumettre une demande d'utilisateur pour des données et des informations;
b) au moins une base de données qui contient des données relatives à ladite demande dudit utilisateur;
c) au moins un serveur d'application Web apte à recevoir ladite demande d'utilisateur, et à se connecter à ladite au moins une base de donnée au nom dudit utilisateur;
d) un système de suivi des utilisateurs configuré de manière à exécuter le procédé selon la revendication 1 pour identifier un utilisateur spécifique qui introduit une demande spécifique de données et d'informations à partir de ladite au moins une base de données en surveillant et en suivant des demandes de l'utilisateur à travers une application Web jusqu'à la base de données,
ledit système de suivi des utilisateurs reçoit une entrée en provenance:

- d'un trafic réseau entre la/les application(s) client(s) des utilisateurs Web et le/les serveur(s) d'application Web, ou les journaux de serveur d'application Web; et
- d'un trafic réseau entre le/les serveur(s) d'application Web et la/les base(s) de données, ou les journaux de base de données,

dans lequel ledit système de suivi des utilisateurs fournit comme sortie un mappage des noms d'utilisateurs des utilisateurs aux instruction SQL de la base de données qui correspondent à la demande qu'ils ont exécutée; et

e) des liens de communication entre les machines qui incorporent ledit réseau.

4. Système selon la revendication 3, configuré de manière à exécuter:

a) un mode d'apprentissage, dans lequel le système apprend automatiquement la demande de connexion/la réponse de l'application Web protégée, la fonctionnalité de l'application Web, les instructions SQL possibles, ainsi que la fonction de mappage des demandes des utilisateurs sur les instructions SQL réelles dans la base de données; et
b) un mode en temps réel dans lequel le système crée un journal d'instructions SQL avec un nom d'utilisateur réel attaché à chaque instruction.

UT System → User to transaction mapping

Web Users

Agent 1

Web server

Agent 2

LOG DB

Fig. 1

## UT System

Network Traffic → Network Management Layer
Network monitoring
Protocols decoding

↓

User Tracking Layer
Web App users identification
Users to SQL statement
mapping

→ Users' actions in terms
of Web Application

SQL queries with a
username attached

↓

Session Identification
Privileges/Role Mining

# Fig. 2

**Users Tracking**

Web App action discovery

User name identification

Web users tracking

SQL statements identification

Mapping from web action to SQL queries

DB users tracking

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009328217 A


**Non-patent literature cited in the description**

- **ROICHMAN, A. ; GUDES, E.** Fine-grained Access Control to Web Databases. *In Proceedings of 12th SACMAT Symposium,* 2007

- **GONEN, Y. ; GAL-OZ, N. ; YAHALOM, R. ; GUDES, E.** CAMLS: A Constraint-based Apriori Algorithm for Mining Long Sequences. *DASFAA,* 2010, 63-77